# EUROPEAN PATENT APPLICATION

(11) **EP 2 208 967 A1**
(43) Date of publication of application: **21.07.2010**
(21) Application number: 09000767.5
(22) Date of filing: 20.01.2009
(51) Int. Cl.: G01C 21/26

(54) **Navigation system including route guidance function and method of route searching**

(71) Applicant: Alpine Electronics, Inc., Tokyo (JP)
(72) Inventor: Wittig, Dirk, 70567 Stuttgart (DE)
(74) Representative: Klunker . Schmitt-Nilson . Hirsch

(57) **Abstract**

A navigation system (1) including route guidance function comprises a route processing unit (13) adapted for calculating a route (51, 52) to a destination and is implemented to perform capturing at least one image of a traffic sign (40) by means of a camera, wherein the traffic sign is showing a network of roads (41) in which at least one of the roads is shown as blocked in at least one travel direction by a corresponding blocking symbol (42), analysing the image of the traffic sign (40), thereby extracting information regarding the network of roads (41) and identifying at least one blocking symbol (42) of the traffic sign and a position thereof within the network of roads, matching the extracted information regarding the network of roads (41) and the position of the at least one blocking symbol (42) with map data (32), and calculating a route (52) to a destination using the map data (32) thereby bypassing at least a part (36) of a road corresponding to the position of the blocking symbol (42). In this way, driver's distraction may be decreased as the driver is not required to keep any detour shown by the traffic sign in mind in order to drive around the blocked road

## Description

### Background of the Invention

### Field of the Invention

The present invention is directed to a navigation system including route guidance function which comprises a route processing unit adapted for calculating a route to a destination and which may be coupled with a camera for capturing an image of a traffic sign. Further, the invention is directed to a vehicle including such navigation system. Moreover, the invention is directed to a method of route searching in a navigation system.

### Description of the Related Art

A commonly known navigation system detects the position of a user, in case that the navigation system is implemented in a vehicle, the position of a vehicle for performing vehicle route guidance. Generally, the current position of the vehicle is detected by using a navigation sensor in the vehicle, a receiver such as a GPS (Global Positioning System) receiver, and map data corresponding to an area surrounding the detected position. For example, the map data is read from a recording medium such as a DVD. The navigation system displays a map image on a display screen and displays a mark indicating a current position of the vehicle superimposed at a predetermined position on the map image. Moreover, such a navigation system usually has route guidance function, wherein the navigation system can search for a route that leads from a start point or a current position to a destination predetermined by the user of the navigation system.

In JP 2006-038558 A there is disclosed a car navigation system which is coupled with an onboard camera mounted in such a way as to photograph a traffic sign in front of a vehicle. A control circuit of a car navigation system inputs image data photographed by the onboard camera into an image processing device. The image processing device performs image recognition processing on captured image data, recognizes traffic-control signs etc. on travel controls placed at roads and extracts information indicated by them as sign data. The extracted sign data is related to corresponding road information or locational information of map data of a map database, then written, stored and accumulated in a sign data storage part. The control circuit of the car navigation system executes route retrieval processing by a route guidance function in consideration of the sign data stored in the sign data storage part. Thus, the system may easily collect and maintain sign data on traffic-control signs and sign data displayed on a road traffic information display board and effectively use the sign data.

When driving in a vehicle, the situation may occur that along the route displayed to the driver one of the roads on the route is blocked, for example as a result of a road construction. Generally, there may be the situation that such blocked road is announced by a corresponding traffic sign along the road on which the vehicle is currently travelling. Such traffic sign may show a detour for bypassing the blocked road. In such situation, the driver of the vehicle will have to recognize the contents of such traffic sign in order to determine a corresponding detour which is appropriate for bypassing the blocked part of the road. This situation may be dangerous as a reason of increased driver distraction, particularly in a situation where the traffic sign announces a rather complicated detour using several streets which the driver will have to remember when travelling along the detour. Furthermore, as soon as the driver leaves the predetermined route as a result of driving around a blocked road, the navigation system will try to lead the driver back to the original route. This may even increase the driver's distraction since the driver does not know whether to follow the detour shown on the traffic sign or whether to follow the route displayed on the display screen of the navigation system. This problem may even be worse in situations where rather complicated detours are necessary for bypassing a blocked road and this detour is displayed with rather complicated and distracting specific traffic signs. In this situation, it may be hard for the driver to take care about the traffic on the road and to simultaneously identify the detour shown on the traffic sign. Further, it may be hard for the driver to keep the complicated detour in mind, especially in unknown areas where the driver is driving for the first time.

### Summary of the Invention

It is therefore an object of the present invention to provide a navigation system including route guidance function which is appropriate for reducing the driver's distraction particularly in a situation where at least one of the roads along a guided route is shown as blocked on a corresponding traffic sign.

In order to solve this problem, the invention provides a navigation system including route guidance function according to the features of claim 1. Moreover, the invention is directed to a vehicle including a navigation system according to the features of claim 10. Further, the invention is directed to a method of route searching in a navigation system according to the features of claim 11.

The navigation system according to the invention comprises a route processing unit adapted for calculating a route to a destination, a terminal coupleable with at least one camera which is adapted for capturing at least one image of a traffic sign, and a traffic sign analysing unit coupled with the terminal for receiving data of at least one image of a traffic sign captured by the camera, the traffic sign showing a network of roads in which at least one of the roads is shown as blocked in at least one travel direction by a corresponding blocking symbol. The traffic sign analysing unit analyses the image of the traffic sign for extracting information regarding the network of roads and for identifying at least one blocking symbol shown on the traffic sign and a position thereof within the network of roads. The route processing unit receives the extracted information and the position of the blocking symbol within the network of roads, matches the extracted information and the position of the blocking symbol with map data provided to the route processing unit, and calculates a route to the destination using the map data thereby bypassing at least a part of a road corresponding to the position of the blocking symbol.

A corresponding method of route searching in a navigation system particularly comprises the following steps: capturing at least one image of a traffic sign, the traffic sign showing a network of roads in which at least one of the roads is shown as blocked in at least one travel direction by corresponding blocking symbol, analysing the image of the traffic sign, thereby extracting information regarding the network of roads and identifying at least one blocking symbol of the traffic sign and a position thereof within the network of roads, and matching the extracted information regarding the network of roads and the position of the at least one blocking symbol with map data, and calculating a route to a destination using the map data thereby bypassing at least a part of a road corresponding to the position of the blocking symbol.

The present invention provides the advantage that by means of analysing the image of the traffic sign, particularly by image recognition processing, and identifying which of the roads of the traffic sign is shown as blocked in at least one travel direction, the driver may be guided along a newly calculated route to a destination, which route is bypassing the blocked part of the respective road. In this way, driver's distraction in a situation where a traffic sign is showing a blocked road within a shown network of roads may be decreased as the driver is not required to keep any detour shown by the traffic sign in mind in order to drive around the blocked road. Rather, a new route bypassing the blocked road is calculated by the route processing unit which receives corresponding information from the traffic sign analysing unit. Particularly, the traffic sign analysing unit analyses the image of the traffic sign and extracts information regarding the shown network of roads. This extracted information is matched with map data provided to the route processing unit, particularly with road network data contained in the map data. In this way, the navigation system may allocate the traffic sign in a particular area of the map data, and may also allocate the position of the shown blocking symbol shown on the traffic sign within the map data. In this way, the navigation system may determine the blocked road in the map data as a result of the determined position of the blocking symbol, so that a corresponding detour may be calculated which may be displayed to the driver.

According to an embodiment of the invention, the route processing unit is adapted for calculating a first route to a destination, particularly in a situation where the driver is entering a destination into the navigation system for getting displayed a corresponding route to the destination. The route processing unit is further adapted for calculating a second route to the destination bypassing at least a part of a road corresponding to the position of the blocking symbol shown on a traffic sign within a shown network of roads, wherein the second route is displayed to the user as an alternative to the first route or instead of the first route.

According to a further embodiment of the invention, the navigation system may include a map data storing device which is adapted for providing map data to the route processing unit including a plurality of links, wherein a respective link is connecting nodes at both of its ends, and wherein the route processing unit is arranged for marking one of the links which corresponds to the position of the identified blocking symbol as being blocked with respect to calculating the route.

For example, the route processing unit may be arranged for matching the extracted information regarding the network of roads with map data provided to the route processing unit by performing the following steps: In a first step, the road on which the user is travelling is identified using the map data, particularly at the time of when the camera is capturing an image of the traffic sign. In a further step, at least one of the nodes on the identified road in the travelling direction which is associated with at least two links is identified. In a further step, the route processing unit performs searching for a corresponding node in the extracted information regarding the network of roads shown on the traffic sign, which node is corresponding to the at least one of the nodes on the identified road. This may be an appropriate way of matching the extracted information regarding the network of roads shown on the traffic sign with map data stored in the navigation system since the road on which the user is travelling is likely to be displayed also on the traffic sign, hence is also part of the network of roads shown on the traffic sign. Thus, the road on which the user is travelling is a promising starting point for the process of matching the extracted information with map data.

According to an embodiment of the invention, the process of searching in the extracted information regarding the network of roads for a corresponding node may include taking into account a respective direction of the at least two links associated with the identified node. In other words, by taking into account the respective direction of the respective links associated with the identified node, it may be searched in the extracted information of the traffic sign for a corresponding node connected to roads which have a substantially corresponding respective direction.

In case that this information is not sufficient for unambiguously matching the extracted information of the traffic sign with map data, the route processing unit may perform the additional steps of identifying at least one further node of the map data which is associated with one of the previously identified at least two links of the first identified node, and searching in the extracted information regarding the network of roads for a node corresponding to the further node. In other words, the process of identifying nodes of the map data may be continued as long as necessary until a corresponding node in the extracted information of the traffic sign is found, so that the traffic sign may be unambiguously allocated in the map data used by the navigation system.

According to a further embodiment of the invention, the traffic sign analysing unit analyses the image of the traffic sign for identifying at least one character, number, color or symbol shown on the traffic sign which is indicative or a part of a street name, street type, a city name and/or point of interest. This data regarding the at least one character, number, color or symbol may be used by the route processing unit for performing the additional steps of searching in the map data for information corresponding to the at least one character, number, color or symbol, and may be used in the process for matching the extracted information regarding the network of roads with the map data. For example, the additional information of the identified character, number, color or symbol, such as a street name or number, street type, city name and/or point of interest, may be used for verifying the matching of the extracted information of the traffic sign with the map data.

In a further embodiment of the invention, the image of the traffic sign may be analysed for identifying at least one detour shown on the traffic sign for bypassing the at least one of the roads which is shown as blocked on the traffic sign. In other words, the image of the traffic sign may be analysed for identifying a detour officially announced and shown on the traffic sign. The data regarding the identified detour may be used in the process of calculating the route to the destination, so that route guidance is now following the officially announced detour recommendation shown on the traffic sign.

In a further embodiment of the invention, the image of the traffic sign may be analysed for identifying at least one character, number, color or symbol shown on the traffic sign which is indicative of a time of when the at least one of the roads is blocked, wherein this data regarding the time may be used in the process of calculating the route to the destination. Therefore, route guidance may be adapted depending on the time of when the respective road is blocked, so that at a time of when the road is not blocked the originally calculated route may be used, whereas at a time of when the road is blocked a detour route may be calculated.

Further embodiments of the invention may be taken from the dependent claims.

### Brief Description of the Drawings

The invention will now be explained in more detail by means of embodiments and accompanying drawings, in which:
- Figure 1: shows a schematic diagram illustrating an embodiment of a navigation system according to the invention;
- Figure 2: shows a schematic illustration of an exemplary map image which may be provided on the display screen of a navigation system;
- Figure 3: shows a schematic illustration of an exemplary traffic sign disposed at a location somewhere along the road on which the user is cur- rently travelling, particularly along a road shown on the map image according to Figure 2;
- Figure 4: shows a schematic illustration of an exemplary map image corresponding to the one as shown in Figure 2, but displaying a detour route as a result of the recognition of the traffic sign according to Figure 3;
- Figure 5: shows a diagram illustrating an exemplary map data storage technique in a process of route searching;
- Figure 6: shows a diagram illustrating an exemplary mesh of roads defined by link data, which mesh of roads is corresponding to the map display as shown in Figure 2;
- Figure 7: shows a schematic illustration of another exemplary map image which may be provided on the display screen of a navigation system;
- Figure 8: shows a schematic illustration of another exemplary traffic sign disposed at a location somewhere on the road on which the user is currently travelling as shown in Figure 7,
- Figure 9: shows a schematic illustration of another exemplary map image corresponding to Figure 7, but displaying a detour route as a result of the recognition of the traffic sign according to Figure 8.

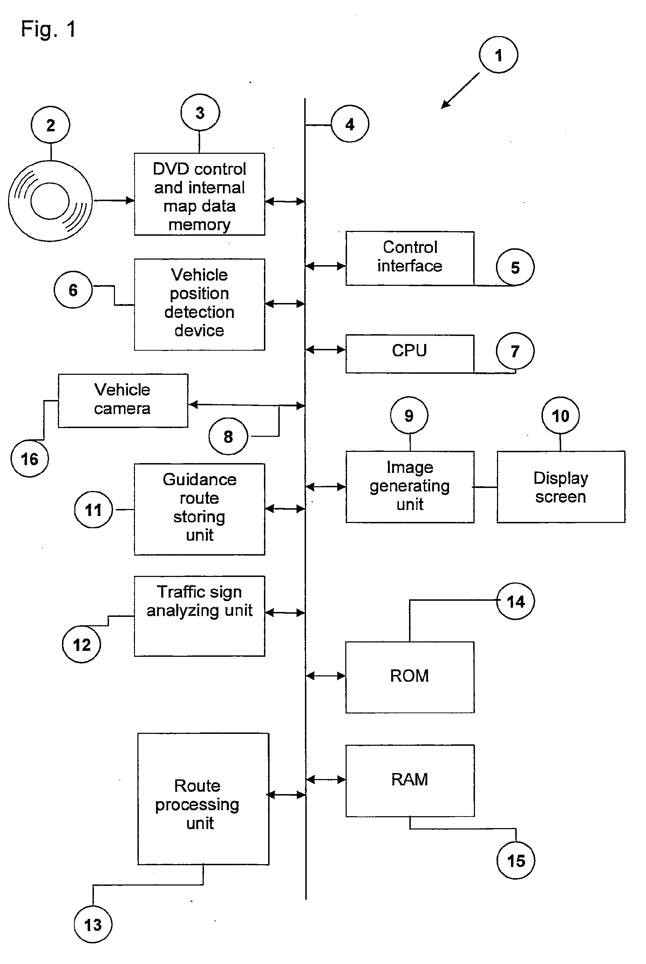

Figure 1 is a schematic diagram illustrating an exemplary implementation of an embodiment of a navigation system 1, which is e.g. implemented in a vehicle. The navigation system 1 includes a DVD control device 3, which may receive data from a recording medium 2 such as a DVD ROM or any other memory type device suitable for storing map data. For example, the recording medium 2 serves as a map storage medium for storing a digital map. The DVD control device 3 is for reading map data from the recording medium 2 and may include an internal map data storing device, such as a RAM memory or something similar, appropriate for temporarily or permanently storing map data read from the recording medium 2 within the navigation system 1. The navigation system 1 further includes a vehicle position detection device 6 for detecting a vehicle position. The vehicle position detection device 6 has a range sensor for generating a pulse every time the vehicle passes through a predetermined distance and a receiving unit such as a GPS receiving unit. Further, the navigation system 1 includes a guidance route storing unit 11 for storing information related to the searched guidance or navigation route to the destination which may be determined by the user. A control interface device 5 may be used as input device for entering inputs such as menu selection, map scrolling, or destination, or the like.

The navigation system 1 further includes a processor (CPU) 7 for controlling the overall operation of the navigation system in interaction with any stored programs, a ROM 14, which may be used, for example, for storing a guidance route search program, a RAM 15 for storing processed results, an image generating unit 9 for generating a map image based on the map data and guidance route data, and a display screen 10 which is appropriate for displaying a map image.

Moreover, the navigation system 1 includes a route processing unit 13 which is arranged for calculating a route to a destination in accordance with user inputs through the control interface device 5. Further, the navigation system comprises a traffic sign analysing unit 12, the function of which is set out in more detail below. All of the above mentioned components implemented in the navigation system 1 are connected via a data bus 4 under the control of the CPU 7.

Further, at least one camera 16 may be coupled via a terminal 8 with the data bus 4. For example, the camera 16 is a front camera of a vehicle which is disposed at the front of the vehicle for capturing images of objects which are placed in front of the vehicle. In an embodiment, the camera 16 may be coupled to the terminal 8 of the data bus 4 of the navigation system 1 by means of a vehicle data communication bus which may also be used for other electronic devices of the vehicle which are interconnected with each other.

The skilled person will appreciate that the implementation of a navigation system 1 as shown in Figure 1 is only an exemplary implementation out of a plurality of possible implementations. Generally, the navigation system according to the invention may be, in principle, any type of navigation system capable of providing route guidance function and having a terminal which may be coupled with a camera for the purposes of traffic sign recognition.

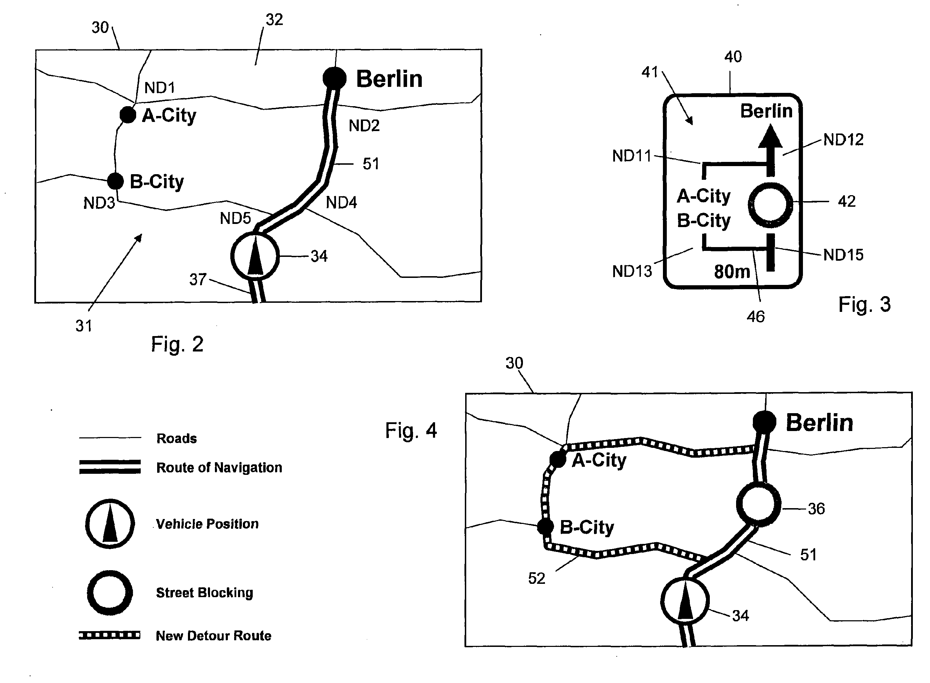

In the following, the functionality and embodiments of a navigation system according to the invention will be described in more detail with reference to Figures 2 to 6.

In Figure 2, a schematic illustration of an exemplary map image is shown which may be provided on the display screen 10 of the navigation system 1 according to Figure 1. The map image 30 as shown in Figure 2 shows a plurality of roads 31 which are displayed in a manner as conventionally known in the art. Furthermore, the navigation system displays a route 51 to the destination "Berlin" in a highlighted manner, for example by displaying the corresponding streets in a different color, or, generally, in a different appearance as compared to the remainder of the roads. Further, the current vehicle's position is displayed by a symbol 34 on the highlighted route 51. As the current position of the vehicle changes with the movement of the vehicle, the vehicle position mark 34 is moved along the route 51 on the display screen, or the map image 30 is scrolled while the vehicle position mark 34 persists at a predetermined point on the display screen. Generally, the map image 30 may be generated by the image generating unit 9 of the navigation system 1 by processing corresponding map data 32 received from an internal map data memory and/or from the recording medium 2.

In Figure 3, a schematic illustration of an exemplary traffic sign 40 is shown, which traffic sign 40 may be disposed at a location somewhere on the road next to the current vehicle's position as indicated by the vehicle position mark 34. For example, there may be the situation that the vehicle is travelling along the highlighted route 51 as shown in Figure 2 and the front camera 16 of the vehicle is capturing at least one image of the traffic sign 40 as shown in Figure 3 disposed next to the current vehicle's position as indicated by the vehicle position mark 34 as depicted in Figure 2. The traffic sign 40 shows an exemplary network of roads 41 in a schematic manner and also indicates that at least one of the roads is blocked in at least one travel direction, in the present case in the drive direction, by a corresponding blocking symbol 42. In Figure 3, the blocking symbol 42 is an imitation of a corresponding traffic sign which is commonly used for indicating that a road or street may not be entered by any motor vehicles. At the same time, the traffic sign 40 is showing a detour 46 via the cities "A-city" and "B-city" in order to pass by or detour the blocked road symbolized by the blocking symbol 42.

At the time of when the camera 16 of the vehicle is capturing an image of the traffic sign 40, the traffic sign analysing unit 12 coupled with the camera 16 via the terminal 8 analyses by image recognition and image processing the image of the traffic sign 40 for extracting information regarding the network of roads 41. Moreover, the traffic sign analysing unit 12 analyses the image of the traffic sign 40 for identifying at least one blocking symbol, in the present case it will identify blocking symbol 42 shown on the traffic sign 40, and will also determine the position of the blocking symbol 42 within the network of roads 41 shown on the traffic sign 40. Particularly, the traffic sign analysing unit 12 may have implemented a traffic sign recognition program which will recognize the type of the sign 40, i.e. that traffic sign 40 is a detour traffic sign.

The route processing unit 13 receives the extracted information regarding the network of roads 41 shown on the traffic sign 40 from the traffic sign analysing unit 12 and also receives the position of the blocking symbol 42 within the network of roads 41. Generally, the route processing unit 13 then matches the extracted information and the position of the blocking symbol 42 with map data 32 provided to the route processing unit 13, so that the contents of the traffic sign 40 may be allocated within the map data 32. After the network of roads 41 of the traffic sign 40 is matched with the map data 32, the route processing unit 13 may re-calculate the route to the destination "Berlin", as shown in Figure 4, to provide a detour or a bypass for the part of the road designated by the street blocking 36, as symbolized in Figure 4 by a symbol corresponding to the blocking symbol 42 as shown in Figure 3. Particularly, the route processing unit 13 calculates a second route 52 to the destination "Berlin", now taking into account the position of the blocking symbol 42 as captured by the camera and the traffic sign analysing unit. The second route 52 bypassing the street blocking 36 corresponding to the position of the blocking symbol 42 may be displayed to the user as an alternative to the first route 51, as illustrated in Figure 4, or may also be displayed instead of the first route 51.

According to an embodiment, the image of the traffic sign 40 may be analysed for identifying at least one indicated detour shown on the traffic sign, such as the detour 46 passing "A-city" and "B-city" for bypassing the road which is shown as blocked. The route processing unit 13 also processes the data regarding the captured detour 46 and uses the data regarding the detour 46 in the process of calculating the route 52 to the destination, so that the second route 52 is calculated to pass "A-city" and "B-city" as shown on the traffic sign 40.

In this regard, the invention provides the advantage that the driver may be less distracted by the contents of the traffic sign 40 since the driver is not required to keep the detour 46 in mind. Rather, the route processing of the navigation system is re-calculating the route to the destination according to the contents of the traffic sign 40, which detour route may be displayed on the display screen of the navigation system, so that the driver is guided along the detour route 46 by the navigation system. Therefore, the driver is not required to keep the detour 46 in mind which may increase the safety during driving as a matter of less distraction and more relaxed driving in complex detour situations.

Another embodiment of the invention includes the implementation that the route processing unit 13 may propose a different detour route 52 which is not following the proposed detour 46 shown on the traffic sign 40, for example if the route processing unit determines that the proposed detour requires less driving time than the proposed detour 46 as officially recommended on the traffic sign 40.

Generally, the analysation process performed by the traffic sign analysing unit 12 may, in principle, use any type of image recognition or processing technologies which is appropriate for extracting significant features of the traffic sign 40 which may be used for matching with the map data 32. Likewise, in the process of matching the extracted information of the traffic sign 40 with the map data 32 any commonly known processes or algorithms may be used which are appropriate for matching different sets of data with each other.

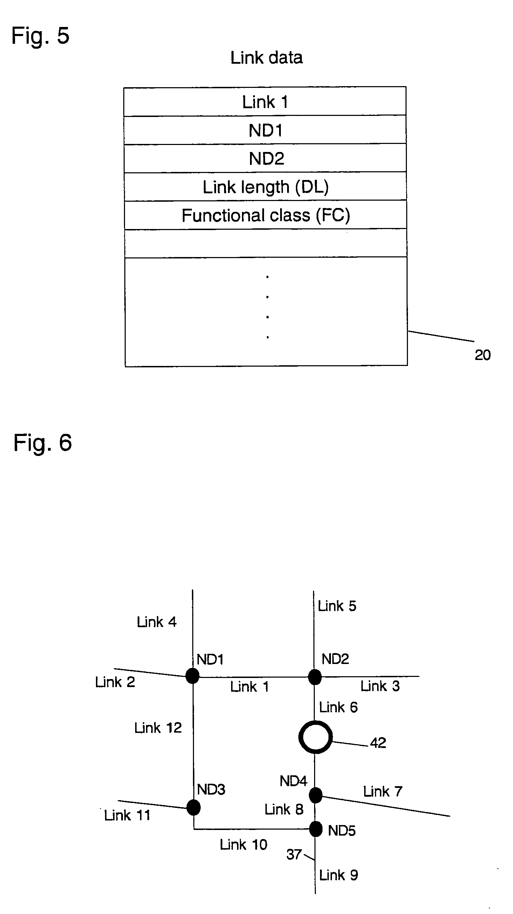

In connection with Figures 5 and 6, an exemplary implementation of a matching process according to the invention will be explained in more detail. The skilled person will appreciate that also other techniques may be applicable for the same purpose.

Figure 5 depicts a diagram illustrating an exemplary map data storage technique which may be used in the process of route searching. The map data provided from the recording medium 2 according to Figure 1 includes a plurality of links, wherein a respective link is conneting nodes at both of its ends. In this way, a portion of a road connecting two nodes is represented by a link. A node may be in principle any interesting geographic point, for example an intersection in a traffic or road network. Each link stored in the data base has associated information for characterizing the respective link. According to Figure 5, an example is depicted for a link denoted as Link 1. The associated information 20 for Link 1 (link data) as shown in Figure 5, contains the nodes ND1, ND2 at a respective end of the link, the link length DL, the functional class FC of the link, and if necessary, any further information associated with the respective link which may be of interest. For example, the functional class may be indicative of the respective type of road, i.e. whether it is a main road or a local road.

Figure 6 depicts a diagram illustrating an exemplary mesh of roads defined by link data of a plurality of links, which mesh of roads is corresponding to the map image as shown in Figure 2. The mesh according to Figure 6 includes the Link 1 of Figure 5 connecting the nodes ND1 and ND2 at both of its ends. Further, the mesh of roads includes an exemplary number of links denoted as Link 1 to Link 12. For example, a road may be defined by the interconnection of Link 5, Link 6, Link 8 and Link 9 with intersections for example at nodes ND2, ND4 and ND5.

When calculating the route 52 to the destination "Berlin" bypassing the street blocking 36 as shown in Figure 4, the route processing unit 13 will mark the Link 6 as being blocked when calculating the route to the destination. Particularly, when matching the extracted information of the traffic sign 40 with the map data 32, it will be recognized that Link 6 corresponds to the blocked road symbolized by blocking symbol 42 shown on the traffic sign 40. In other words, the Link 6 covers or is at least proximate to the determined position of the blocking symbol 42. Therefore, Link 6 is marked in the map data as being blocked for route calculation, for example by means of a respective entry in the data set 20 as shown in Fig. 5 and applied for Link 6. Accordingly, the route 52 will be calculated so that Link 6 will be bypassed or detoured, since Link 6 is marked as being blocked as a result of the traffic sign recognition and analysis.

In the following, a possible process for matching the extracted content of the traffic sign 40 regarding the network of streets 41 with map data 32 will be explained with reference to Figures 3 and 6.

In a first step, the road on which the vehicle is travelling will be identified. Particularly, in the example as shown in Figure 2, it will be determined that the vehicle is currently travelling on the road 37 advancing node ND5, as indicated by the vehicle position mark 34. For example, the road 37 will be identified using the map data 32 and the data from the vehicle position detection device 6 at the time of when the camera 16 is capturing the traffic sign 40. In a next step, at least one of the nodes on the identified road 37, for example the node ND5 next to the current vehicle's position in the travelling direction will be identified in order to determine a possible intersection of roads which may also be shown on the traffic sign 40. As a typical feature of an intersection of roads, the corresponding node is associated with at least two links, such as node ND5 which is associated with the Link 8, 9 and 10 defining a possible intersection of roads which may also be displayed on the traffic sign.

In a further step, the route processing unit 13 will search in the extracted information of the traffic sign 40, particularly in the extracted network of roads 41 for a corresponding node which is corresponding to node ND5. For example, it is assumed that the vehicle's current position is corresponding to a position at the bottom of traffic sign 40 right before node ND15 so that the searching process will start at this point of the extracted network of roads. At this point, the respective direction of the Link 8, 9 and 10 may be taken into account when searching for a corresponding node. For example, it will be determined that at node ND15 a road in substantially vertical direction intersects with a road in substantially horizontal direction corresponding to Link 8 and Link 10, respectively, as contained in the map data, so that it may be determined that node ND15 of the network of roads 41 corresponds to the node ND5 of the map data.

If this information as described above is not sufficient for unambiguously matching the extracted information with map data, the route processing unit 13 may continue with searching for a further node, such as node ND3 which is associated with Link 10 as being one of the links associated with the previously identified node ND5. Similarly as with respect to node ND5, it may be determined whether node ND3 corresponds with any of the nodes of the network of roads 41, for example node ND13 as shown in Figure 3.

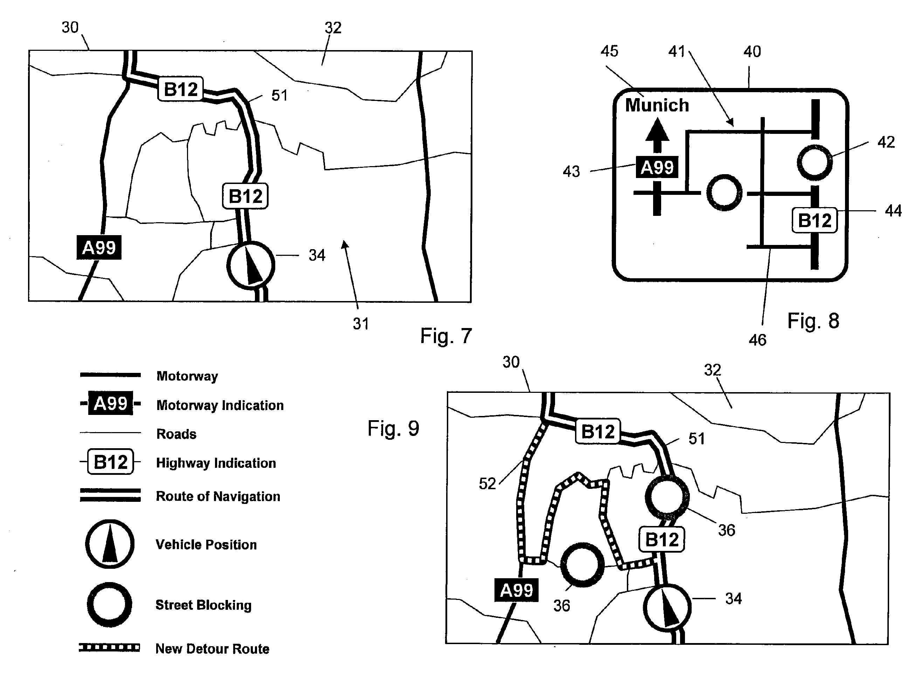

In Figure 7, a schematic illustration of another exemplary map image is shown which may be provided on a display screen of a navigation system in a different situation as compared to Figure 2. Similarly as in Figure 2, the map image 30 shows a plurality of roads 31 with a displayed highlighted route 51. Again, the vehicle's current position is indicated by vehicle position mark 34. In addition to the map image as shown in Figure 2, the map image 30 as shown in Figure 7 displays characters, numbers, colors and/or symbols, such as "B12" and "A99" indicating the particular motorway A99 and highway B12, respectively, corresponding to the official designation of the respective road which may comprise the same or a corresponding character, number, color and/or symbol as shown, for example, on paper maps or traffic signs.

In Figure 8, there is shown a schematic illustration of another exemplary traffic sign 40 showing a different network of roads 41 as compared to the traffic sign as shown in Figure 3, but also with blocking symbols 42 which indicate that the respective road is blocked in at least one travel direction. In addition to the blocking symbols 42 and the network of roads 41, the traffic sign 40 is showing characters, numbers, colors and/or symbols 43, 44 and 45 which are indicative or a part of a street name, street type, city name and/or point of interest. For example, symbol 43 is indicating "A99", symbol 44 is indicating "B12" and the characters in "Munich" are each a respective part of a city name. According to an embodiment of the invention, at least one of these characters, numbers, colors and/or symbols 43 to 45 may be used in the process for matching the extracted network of roads 41 with corresponding map data. For example, the road shown on the traffic sign 40 which is associated with symbol 43 "A99" will be associated with the motorway A99 which is part of the map data with, for example, "A99" stored in the list as shown in Figure 5. This may also be done for the road designated with symbol 44 "B12" indicating that this road corresponds with the highway B12 as contained in the map data. The above process may also be done analogously for city names and/or other area names stored elsewhere in the map data.

Therefore, with receiving data from the traffic sign analysing unit 12 regarding the identified characters, numbers, colors or symbols 43, 44, 45 and with searching in the map data for information corresponding to the respective character, number, color or symbol 43, 44, 45, the matching process may be facilitated or may be verified.

As shown in Figure 9, the route processing unit 13 will calculate a new route 52 bypassing the part of the road marked with street blocking 36 based on the information extracted from the detected detour traffic sign 40 as shown in Figure 8, so that the driver is not required to keep the rather complicated detour as shown on traffic sign 40 in mind. Furthermore, there is the possibility that the navigation system will indicate to the driver the fastest detour route to the destination, such as route 52 shown in Figure 9 which will not necessarily be the shortest detour to the destination.

On the other hand, if the traffic sign 40 is showing an officially recommended detour, for example by highlighting the respective roads shown on the traffic sign, this information may also be analysed by the traffic sign analysing unit for identifying the detour shown on the traffic sign. The route processing unit 13 then receives the data regarding the detour and may use the data regarding the detour in the process of calculating an appropriate detour route to the destination.

## Claims

1. A navigation system (1) including route guidance function, comprising
- a route processing unit (13) adapted for calculating a route (51, 52) to a destination,
- a terminal (8) coupleable with at least one camera (16) which is adapted for capturing at least one image of a traffic sign (40),
- a traffic sign analyzing unit (12) coupled with the terminal (8) for receiving data of at least one image of a traffic sign (40) captured by the camera, the traffic sign showing a network of roads (41) in which at least one of the roads is shown as blocked in at least one travel direction by a corresponding blocking symbol (42),
- wherein the traffic sign analyzing unit (12) analyses the image of the traffic sign (40) for extracting information regarding the network of roads (41) and for identifying at least one blocking symbol (42) shown on the traffic sign and a position thereof within the network of roads,
- wherein the route processing unit (13) receives the extracted information and the position of the blocking symbol (42), matches the extracted information and the position of the blocking symbol (42) with map data (32) provided to the route processing unit, and calculates a route (52) to a destination using the map data (32) thereby bypassing at least a part (36) of a road corresponding to the position of the blocking symbol (42).

2. The navigation system of claim 1, wherein
the route processing unit (13) is adapted for calculating a first route (51) to a destination and for calculating a second route (52) to the destination bypassing at least a part (36) of a road corresponding to the position of the blocking symbol (42), wherein the second route (52) is displayed to the user as an alternative to the first route (51) or instead of the first route (51).

3. The navigation system of claim 1 or 2, further including
- a map data storing device (2, 3) which is adapted for providing map data (32) to the route processing unit (13) including a plurality of links (Link), wherein a respective link (Link 1) is connecting nodes (ND1, ND2) at both of its ends,
- wherein the route processing unit (13) is arranged for marking one of the links (Link 6) which corresponds to the position of the identified blocking symbol (42) as being blocked with respect to calculating the route.

4. The navigation system of one of claims 1 to 3, further including
- a map data storing device (2, 3) which is adapted for providing map data (32) to the route processing unit (13) including a plurality of links (Link), wherein a respective link (Link 1) is connecting nodes (ND11, ND12) at both of its ends,
- wherein the route processing unit (13) is arranged for matching the extracted information regarding the network of roads (41) with map data (32) by performing the following steps:
- identifying the road (37) on which the user (34) is travelling using the map data at the time of when the camera (16) is capturing the traffic sign (40),
- identifying at least one of the nodes (ND5) on the identified road (37) in the travelling direction which is associated with at least two links (Link 8, 9, 10),
- searching in the extracted information regarding the network of roads (41) shown on the traffic sign (40) for a corresponding node (ND15) which is corresponding to the at least one of the nodes (ND5) on the identified road (37).

5. The navigation system of claim 4, wherein
searching in the extracted information regarding the network of roads (41) for a corresponding node (ND15) includes taking into account a respective direction of the at least two links (Link 8, 9, 10) associated with the identified node (ND5).

6. The navigation system of claim 4 or 5, wherein
the route processing unit (13) is adapted for performing the additional steps of identifying, using the map data, at least one further node (ND3) which is associated with one (Link 10) of the at least two links (Link 8, 9, 10), and searching in the extracted information regarding the network of roads (41) for a node (ND13) corresponding to the further node (ND3).

7. The navigation system of one of claims 1 to 6, wherein
- the traffic sign analyzing unit (12) analyses the image of the traffic sign (40) for identifying at least one character, number, color or symbol (43, 44, 45) shown on the traffic sign which is indicative or part of at least one of a street name, street type, city name and point of interest,
- the route processing unit (13) receives data regarding the at least one character, number, color or symbol (43, 44, 45) and is arranged for performing the additional steps of searching in the map data (32) for information corresponding to the at least one character, number, color or symbol (43, 44, 45) and using this information in the process for matching the extracted information regarding the network of roads (41) with the map data (32).

8. The navigation system of one of claims 1 to 7, wherein
- the traffic sign analyzing unit (12) analyses the image of the traffic sign (40) for identifying at least one detour (46) shown on the traffic sign for bypassing the at least one of the roads shown as blocked,
- the route processing unit (13) receives data regarding the detour (46) and is arranged for using the data regarding the detour (46) in the process of calculating the route (52) to the destination.

9. The navigation system of one of claims 1 to 8, wherein
- the traffic sign analyzing unit (12) analyses the image of the traffic sign (40) for identifying at least one character, number, color or symbol (43, 44, 45) shown on the traffic sign which is indicative of a time of when the at least one of the roads is blocked,
- the route processing unit (13) receives data regarding the time and is arranged for using the data regarding the time in the process of calculating the route (52) to the destination.

10. A vehicle including a navigation system (1) according to one of the preceding claims.

11. A method of route searching in a navigation system, comprising the following steps:
- capturing at least one image of a traffic sign (40), the traffic sign showing a network of roads (41) in which at least one of the roads is shown as blocked in at least one travel direction by a corresponding blocking symbol (42),
- analysing the image of the traffic sign (40), thereby extracting information regarding the network of roads (41) and identifying at least one blocking symbol (42) of the traffic sign and a position thereof within the network of roads,
- matching the extracted information regarding the network of roads (41) and the position of the at least one blocking symbol (42) with map data (32), and calculating a route (52) to a destination using the map data (32) thereby bypassing at least a part (36) of a road corresponding to the position of the blocking symbol (42).

12. The method of claim 11, further including the steps of
- providing map data (32) including a plurality of links (Link), wherein a respective link (Link 1) is connecting nodes (ND1, ND2) at both of its ends, and
- marking one of the links (Link 6) which corresponds to the position of the identified blocking symbol (42) as being blocked with respect to calculating the route.

13. The method of claim 11 or 12, further including the steps of
- analysing the image of the traffic sign (40) for identifying at least one character, number, color or symbol (43, 44, 45) shown on the traffic sign which is indicative or part of at least one of a street name, street type, city name and point of interest, and
- searching in the map data (32) for information corresponding to the at least one character, number, color or symbol (43, 44, 45) and using this information for performing or verifying the matching of the extracted information regarding the network of roads (41) with the map data (32).
